# EUROPEAN PATENT SPECIFICATION

(11) **EP 2 511 143 B1**
(45) Date of publication and mention of the grant of the patent: **03.12.2014**
(21) Application number: 11003148.1
(22) Date of filing: 14.04.2011
(51) Int. Cl.: B60R 22/48

(54) **Control circuit for a mechanical locking device in a restraint system of a motor vehicle**
Steuerschaltung für eine mechanische Verschlussvorrichtung in einem Rückhaltesystem eines Motorfahrzeugs
Circuit de contrôle pour dispositif de verrouillage mécanique dans un système de retenue de véhicule à moteur

(43) Date of publication of application: 17.10.2012
(73) Proprietor: Autoliv Development AB, 447 83 Vårgårda (SE)
(72) Inventor: Höfelsauer, Herbert, 81667 München (DE)
(74) Representative: Müller Verweyen

(56) References cited:
- EP-A2- 2 327 590
- US-A1- 2007 007 819

## Description

The invention relates to a control circuit for a mechanical locking device in a restraint system of a motor vehicle according to the preamble of claim 1.

Common interfaces for a buckle switch in a seat belt buckle are adapted to apply a sensing voltage or sensing current to the buckle switch periodically. The switching state of the switch is detected by sensing an electrical value resulting from a modification of said sensing signal by switching the buckle switch in response to inserting the belt tongue into, or releasing it from, the buckle. However, oxides, organic layers or other insulating contaminations on the contact may lead to a drift of the sensed electrical value to out-of-tolerance regions which do no longer allow a reliable detection of the switching state of the buckle switch.

In order to avoid the above problems, different solutions providing specially designed switch contacts, for example gold coated switch contacts are known. Such solutions are expensive but not all of them provide satisfying results.

Also known are Hall sensors for detecting the switching state of a buckle switch, see for example US 7 116 220 B2, DE 197 39 971 A1 and DE 102 39 754 C1. These sensors provide reliable solutions with respect to the above mentioned contaminations, which however are relatively expensive and require special interfaces adapted to the Hall sensor.

EP 2 327 590 A2 discloses a seat belt retractor motor driving apparatus with a microcomputer adapted to sense the switching state of a buckle switch and means for applying an electrical current across the buckle switch at the battery voltage in order to destroy an oxide film formed on the internal contacts of the buckle switch.

The object of the invention is to provide a cost effective control circuit allowing a reliable detection of the switching state of the switch over the lifetime of the mechanical locking device.

The invention solves this object with the features of independent claim 1. By applying a cleaning pulse with a voltage significantly higher than the voltage of the sensing signal the insulating contaminations can be burnt away from the switch contacts using a kind of fritting effect. In this manner, the switch contacts can be maintained essentially free of insulating contaminations over the lifetime of the locking device. This enables a reliable detection of the switching state of the switch not disturbed by the above insulating contaminations. Expensive Hall sensors and corresponding special interfaces, or special switch contact solutions are not required. Furthermore, as far as the invention is realized in the control circuit it can be applied to all standard buckles.

The invention has realized that today's low voltage, typically 5 V or 3.3 V, electronic components used in modern vehicle control circuits (ECU's) are a main source for the above mentioned problems with the insulating contaminations. One reason is that these low voltages have difficulties to cause a breakthrough of a sensing current through the insulating contaminating layers, or, in other words, to fulfill the switching requirements on the switch contacts, typically for example 5 mA at 5 V. Another reason is that the voltages are not high enough for achieving a burning or fritting effect to the insulating contaminations. With respect to the above, an advantageous aspect of the invention is the application of an electrical cleaning pulse with a voltage of at least 6 V, preferably at least 8 V, more preferably at least 10 V.

Preferably the cleaning pulse has a voltage corresponding to the main vehicle voltage provided by the vehicle battery, for example 12 V. In this case no particular voltage transformation is necessary. In the present application absolute voltage values like 6V or 12 V are not restricted to actual voltages but can also refer to nominal voltages, taking into account that for example the actual voltage of a 12 V vehicle battery may deviate from 12 V depending on the charge state, the applied load etc.

Preferably the cleaning pulse is periodically applied to the switch which ensures that the switch contacts are held free of insulating contaminations under all conditions. In particular, the cleaning pulse may preferably be applied together with a sensing pulse, for example with every n-th sensing pulse or with every sensing pulse, which may be easier to realize in a practical circuit. However, the cleaning pulse may alternatively be applied separately from the sensing pulses if this is preferred for some reason.

In addition or alternatively to periodic application of cleaning pulses, the cleaning pulse may be applied to the switch if the sensing circuit determines that a predetermined condition is fulfilled. In particular, the cleaning pulse is preferably applied to said switch if said sensed electrical value is in an out-of-tolerance region with respect to nominal regions corresponding to the switching states of said switch.

A preferred application of the invention is the monitoring of the switching state of a buckle switch in a vehicle seatbelt buckle. However, the invention is not restricted to buckle switches. Other applications are for example switches in Isofix locks, a switch for deactivating a passenger airbag, or more generally switches in user-operated mechanical locking devices of vehicle restraint systems.

In the following the invention shall be illustrated on the basis of preferred embodiments with reference to the accompanying drawings, wherein:
- Fig. 1: shows voltage over time diagrams illustrating the time dependence of the sensing and cleaning pulses;
- Fig. 2A: shows a schematic circuit diagram illustrating a control circuit for a mechanical locking device in a first embodiment;
- Fig. 2B: shows a voltage over time diagram illustrating the output voltage of the control circuit of Fig. 2A;
- Fig. 3A: shows a schematic circuit diagram illustrating a control circuit for a mechanical locking device in a second embodiment;
- Fig. 3B: shows a voltage over time diagram illustrating the output voltage of the control circuit of Fig. 3A;
- Fig. 4: shows voltage over time diagrams illustrating the application of cleaning pulses in one embodiment; and
- Fig. 5: shows voltage over time diagrams illustrating the application of cleaning pulses in another embodiment.

The seatbelt buckle arrangement 10 comprises a buckle 11 and a control circuit 12 which is electrically connected to the buckle 11 by means of a conductor 13 through a cable. The buckle 11 comprises a receptacle for receiving a belt tongue not shown in the Figures, and a mechanical lock for latching the belt tongue in said buckle 11 if the belt tongue is pushed sufficiently far into the receptacle by a user, and to release the belt tongue upon pressing a release button provided on the buckle 11 by a user. The buckle 11 furthermore comprises a switch 14 which is operated in response to inserting the tongue into, or removing it from, the buckle 11. In particular, the buckle switch 14 may for example be closed if the belt tongue is latched in the buckle 11, and the buckle switch 14 may for example be open if the belt tongue is unlatched from the buckle 11. In this manner the switching state of the buckle switch indicates the locking state of the buckle 11.

The control circuit 12 is adapted to apply a periodic sensing signal to the buckle 11 via the electrical connection 13. In order to generate the sensing signal the control circuit 12 may comprise a current source 15 adapted to draw an essentially constant current of a few mA, for example 6.3 mA, from a voltage supply Vs which may be provided to the control circuit 12 via a corresponding voltage supply input 16. The supply voltage Vs may in particular provided by the vehicle battery, in which case Vs is usually 12 V nominally.

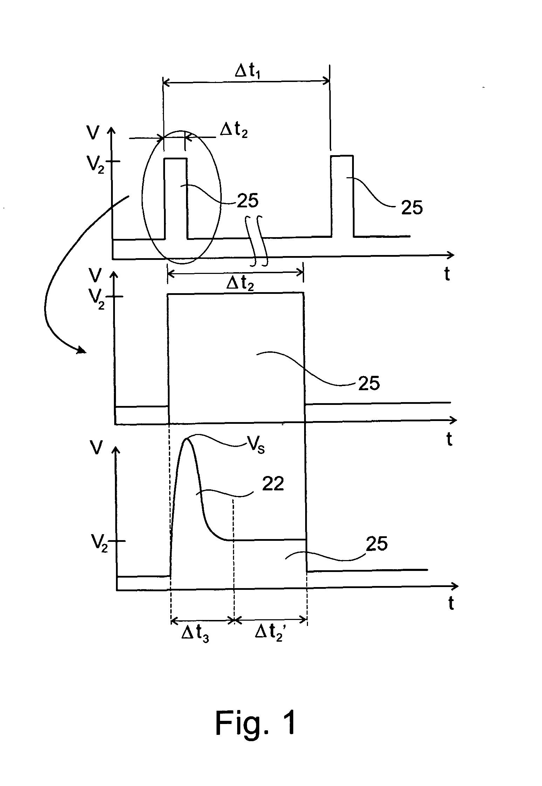

The control circuit 12 comprises a controlled switching device 17, for example a transistor device, which is arranged in the current path from the current source 15 to the buckle 11. The switching device 17 is controlled via a trigger 18 which is adapted to generate rectangular pulses which, when applied to the switching device 17, generates sensing voltage signal at the output 19 of the control circuit with the time structure shown in the upper diagram of Fig. 1: The repetition period Dt1 of the sensing pulses 25 is long, preferably at least a factor of 100 longer, as compared to the duration Dt2 of each sensing pulse 25. Between consecutive sensing pulses 25, zero voltage is applied in order to keep the current consumption as low as possible. In a practical embodiment, Dt1 may be 500 ms and Dt2 may be 2 ms. The voltage V2 of the sensing pulses 25 depends in particular on the nominal current of the current source 15 and the resistance in the whole current path but is usually well below 5 V, for example in the range of 0.5 to 3 V. The voltage diagram in the middle of Fig. 1 is enlarged in the region of a sensing pulse 25.

The sensing pulses 25 are applied to the buckle 11 via the electrical connection 13. The switch 14 is connected in the buckle such that the overall resistance of the buckle 11 depends on the switching state of the switch 14. In particular, the current path in buckle 11 may comprises a first resistor R1 and a second resistor R2 connected in series, where the switch 14 is connected in parallel to the second resistor R2 such that the switch 14 short-circuits the resistor R2 when closed. The current path is finally earthed at the buckle 11. Practical values of the resistors R1 and R2 may be in the range of several 100 Ohm, for example R1 = 100 Ohm and R2 = 400 Ohm.

The control circuit 12 comprises a sensing circuit 20 for sensing an electrical value depending on the switching state of the switch 14. For example, the sensing circuit 20 may be based on measuring the voltage drop over an internal measurement resistor, which voltage drop clearly depends on the switching state of the switch 14. The sensing circuit 20 expediently provides an output signal to an output of the control circuit 12 which indicates the locking state of the buckle. Suited control operations may be performed depending on the output signal of the sensing circuit 20. For example, a warning means for warning the driver may be activated if the sensing circuit 20 detects an unlocked state of the buckle.

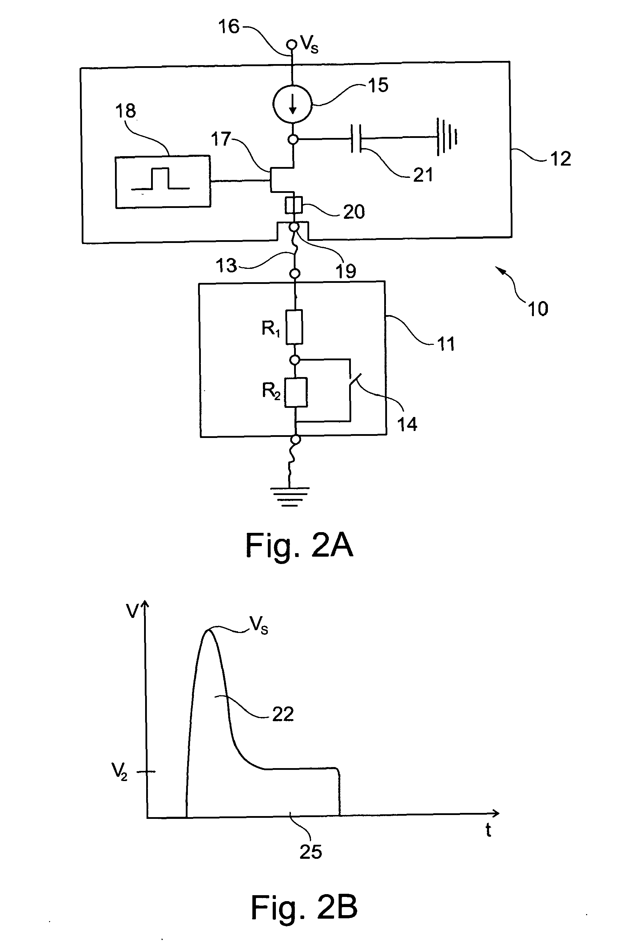

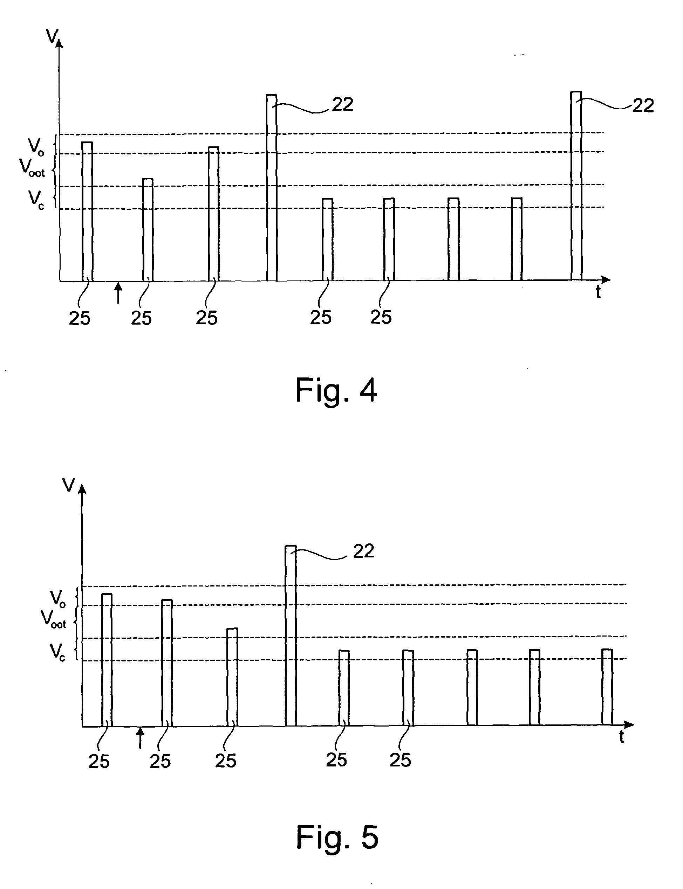

The control circuit 12 furthermore comprises a circuit for generating cleaning pulses. In Figures 2A and 2B cleaning pulses are generated periodically together with every sensing pulse 25. However, this is not necessarily the case. For example, the control circuit 12 may be adapted to apply cleaning pulses periodically together with every n-th sensing pulse 25, where n is a positive integer greater than 1, or periodically but independently from the sensing pulses 25, or upon request as shall be explained below with respect to Fig. 5, or according to any suited combination of the above schemes.

In the embodiment of Fig. 2A the circuit for generating cleaning pulses is simply a capacitor 21 provided in the control circuit 12, one electrode of which is connected to the current path behind the current source 15 and the switching device 17 and the other electrode of which is for example earthed. During the long idle periods in which the switching device 17 holds the current path closed, the capacitor 21 is charged to the full supply voltage Vs. When the switching device 17 opens the current path, the supply voltage Vs is provided from the capacitor to the output 19 of the control circuit. This is shown in the lower diagram of Fig. 1 where the output voltage of the control circuit 12 quickly rises to Vs which is significantly higher than the sensing voltage V2.

The capacitor 21 has a capacity which provides a sufficiently small time constant well bellow the duration Dt2 of the sensing pulses 25. In a practical embodiment the capacity of the capacitor 21 may be of the order of 1000 nF, for example 820 nF. Due to the discharge of the capacitor 21 through the current path, the voltage drops relatively quick to the sensing voltage V2 generated by the current source 15. As a result a cleaning pulse 22 with a relatively high voltage Vs and a time duration Dt3 smaller than the "current on"-period Dt2 is preceding any sensing pulse 25 which has a time duration of Dt2'=Dt2-Dt3. In a practical embodiment the duration Dt3 of the cleaning pulse may be in the range of around 0.5 to 1 ms.

If a non-conducting contamination layer is present on the contacts of the switch 14 during the application of a cleaning pulse, a significant part of the supply voltage Vs drops over the switch 14. If the switch is closed this leads to a burning of the contamination layers on the switch contacts by a fritting effect.

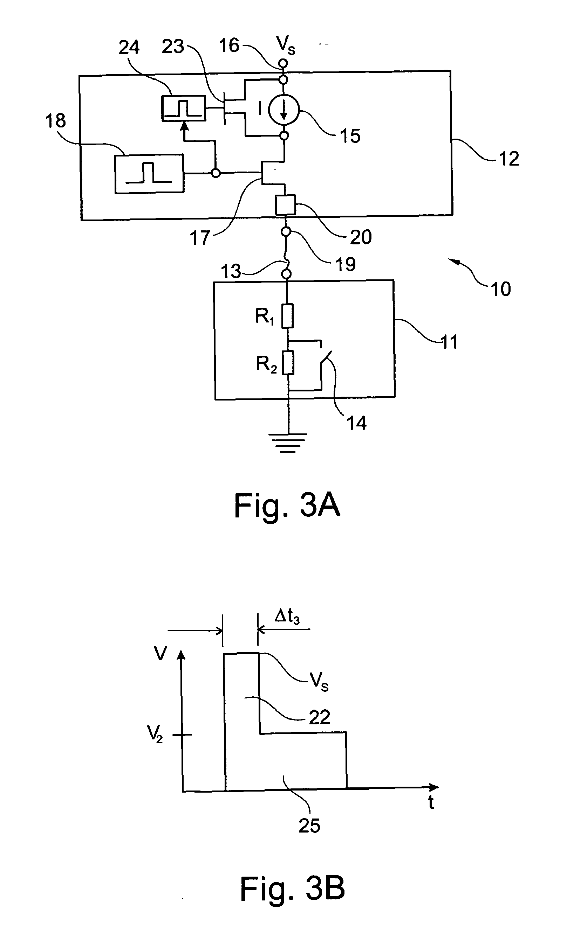

The embodiment according to Fig. 3A differs from the embodiment according to Fig. 2A in the means for generating the cleaning pulse. Instead of the capacitor 21, the control circuit 12 according to Fig. 3A comprises a further controlled switching device 23 connected for short-circuiting the current source 15. The switching device 23 is periodically triggered by a further trigger 24 which may be in turn triggered by the first trigger 18 but has a smaller time constant of for example 1 ms. The resulting pulse shape is shown in Fig. 3B. The short-circuiting of the current source 15 leads to a rectangular cleaning pulse of a duration Dt3 of for example 1 ms preceding any sensing pulse 25.

Fig. 3A illustrates only one way of applying the vehicle battery voltage to the electrical connection 13 to the locking device 11 for a pre-determined period of time. Other ways of realizing this are possible.

Figure 4 relates to an embodiment where cleaning pulses 22 are periodically applied to the switch 14. More particularly, every 5-th pulse, generally every n-th pulse where n>1, is a cleaning pulse 22. At the beginning switch 14 is open. Here the sensed voltage of the first sensing pulse lies in the upper regular region Vo indicating an open switch. After the first sensing pulse the switch 14 is closed, as indicted by an arrow below the time axis. However, due to contaminations on the switch contacts the next sensed voltage is in an out-of-tolerance range Voot between the regular region Vo indicating an open switch and the regular region Vc indicating a closed switch. The next sensed voltage is even wrongly lying in the range Vo. After the cleaning pulse 22 is applied and the switch contacts are fritted, the following sensed voltages are in the correct region Vc indicating a closed switch. The embodiment of Fig. 4 has the advantage over that of Fig. 5 that sensed voltages pretending a wrong switching state of the switch 14 (third peak in Fig. 4) are automatically prevented after the next cleaning pulse.

Figure 5 relates to an embodiment where a cleaning pulse 22 is applied to the switch 14 only if the sensing circuit 20 determines that a predetermined condition is fulfilled, in particular if the sensed voltage lies in the out-of-tolerance region Voot which may also include voltages below the region Vc or voltages above the region Vo. In this embodiment, a sensed voltage pretending a wrong switching state of the switch 14 (second peak in Fig. 5) cannot be detected and as long as the sensed voltage does not drift to the out-of-tolerance region, the switching state of the switch 14 may be wrongly indicated by the sensing means 20.

Generally, the sensed electrical value may also be a current instead of a voltage, in particular when a voltage source is used instead of the current source 15.

## Claims

1. A control circuit (12) for a mechanical locking device (11) in a restraint system of a motor vehicle, comprising an electrical output (19) for a connection (13) to a switch (14) in said locking device (11) operated depending on a locking state of said locking device (11), means (15, 17, 18) adapted to generate a sensing signal (25) and to apply said sensing signal (25) to said switch (14), and sensing means (20) for sensing an electrical value indicative of a switching state of said switch (14), **characterized in that** the sensing signal is comprising sensing pulses having a repetition period Dt1 and a sensing voltage and **in that** said control circuit (12) comprises means (21; 23, 24) for applying to said switch (14) an electrical cleaning pulse (22) with a voltage higher than said periodical sensing signal (25).

2. The control circuit as claimed in claim 1, wherein said cleaning pulse (22) has a voltage of at least 6 V.

3. The control circuit as claimed in claim 1 or 2, wherein said cleaning pulse (22) has a voltage corresponding to the main vehicle voltage Vs provided by the vehicle battery.

4. The control circuit as claimed in any one of the preceding claims, wherein said cleaning pulse (22) is periodically applied to said switch (14).

5. The control circuit as claimed in any one of the preceding claims, wherein said cleaning pulse (22) is applied together with a sensing pulse (25).

6. The control circuit as claimed in any one of claim 5, wherein said cleaning pulse (22) is applied together with every, or every n-th, sensing pulse (25).

7. The control circuit as claimed in any one of the preceding claims, wherein said cleaning pulse (22) is applied separately from said sensing pulses (25).

8. The control circuit as claimed in any one of the preceding claims, wherein said cleaning pulse (22) is applied to said switch (14) if said sensing circuit (20) determines that a predetermined condition is fulfilled.

9. The control circuit as claimed claim 8, wherein said cleaning pulse (22) is applied to said switch (14) if said sensed electrical value is in an out-of-tolerance region with respect to nominal regions corresponding to the switching states of said switch (14).

10. The control circuit as claimed in any one of the preceding claims, comprising a capacitor (21) connected in said control circuit (12) such that said cleaning pulse (22) is generated by discharging said capacitor (21).

11. The control circuit as claimed in any one of the preceding claims, comprising means (23, 24) for generating said cleaning pulse (22) by applying the vehicle battery voltage Vs via said electrical output (19) to said locking device (11) for a pre-determined period of time.

12. The control circuit as claimed in any one of the preceding claims, comprising a current source (15) connected in said control circuit (12) such that said sensing pulses (25) are generated by switching a current path from said current source (15) via said output (19) to said switch (14).

13. The control circuit as claimed in claim 12, comprising a switching device (17) for switching said current path from said current source (15) to said switch (14).

14. The control circuit as claimed in claims 12 or 13, comprising a device (17) for short-circuiting said current source (15) for a pre-determined period of time in order to generate said cleaning pulse (22).

## Patentansprüche

1. Steuerschaltung (12) für eine mechanische Verschlussvorrichtung (11) in einem Rückhaltesystem eines Motorfahrzeugs, umfassend einen elektrischen Ausgang (19) als Verbindung (13) mit einem Schalter (14) in der Verschlussvorrichtung (11), der in Abhängigkeit eines Verriegelungszustands der Verschlussvorrichtung (11) betätigt wird, Mittel (15, 17,18), die ausgelegt sind, ein Abtastsignal (25) zu erzeugen und das Abtastsignal (25) an den Schalter (14) anzulegen, und Abtastmittel (20) zum Erfassen eines elektrischen Werts, der einen Schaltzustand des Schalters (14) angezeigt, **dadurch gekennzeichnet, dass** das Abtastsignal Abtastimpulse umfasst, die eine Wiederholungsperiode Dt1 und eine Abtastspannung aufweisen, und dass die Steuerschaltung (12) Mittel (21; 23; 24) zum Anlegen eines elektrischen Reinigungsimpulses (22) an den Schalter (14) umfasst, mit einer Spannung, die höher ist als das periodische Abtastsignal (25).

2. Steuerschaltung nach Anspruch 1, wobei der Reinigungsimpuls (22) eine Spannung von wenigstens 6 V aufweist.

3. Steuerschaltung nach Anspruch 1 oder 2, wobei der Reinigungsimpuls (22) eine Spannung aufweist, die der Hauptspannung Vs des Fahrzeugs entspricht, die von der Fahrzeugbatterie bereitgestellt wird.

4. Steuerschaltung nach einem der vorhergehenden Ansprüche, wobei der Reinigungsimpuls (22) periodisch an den Schalter (14) angelegt wird.

5. Steuerschaltung nach einem der vorhergehenden Ansprüche, wobei der Reinigungsimpuls (22) zusammen mit einem Abtastimpuls (25) angelegt wird.

6. Steuerschaltung nach Anspruch 5, wobei der Reinigungsimpuls (22) zusammen mit jedem oder jedem n-ten Abtastimpuls (25) angelegt wird.

7. Steuerschaltung nach einem der vorhergehenden Ansprüche, wobei der Reinigungsimpuls (22) getrennt von den Abtastimpulsen (25) angelegt wird.

8. Steuerschaltung nach einem der vorhergehenden Ansprüche, wobei der Reinigungsimpuls (22) an den Schalter (14) angelegt wird, wenn das Abtastmittel (20) feststellt, dass eine vorbestimmte Bedingung erfüllt ist.

9. Steuerschaltung nach Anspruch 8, wobei der Reinigungsimpuls (22) an den Schalter (14) angelegt wird, wenn sich der erfasste elektrische Wert in einem Bereich außerhalb eines Toleranzbereichs in Bezug auf Nominalbereiche befindet, die den Schaltzuständen des Schalters (14) entsprechen.

10. Steuerschaltung nach einem der vorhergehenden Ansprüche, umfassend einen Kondensator (21), der derart an die Steuerschaltung (12) angeschlossen ist, dass der Reinigungsimpuls (22) durch Entladung des Kondensator (21) erzeugt wird.

11. Steuerschaltung nach einem der vorhergehenden Ansprüche, umfassend Mittel (23, 24) zur Erzeugung des Reinigungsimpulses (22) durch Anlegen der Spannung Vs der Fahrzeugbatterie für eine vorbestimmte Zeitdauer über den elektrischen Ausgang (19) an die Verschlussvorrichtung (11).

12. Steuerschaltung nach einem der vorhergehenden Ansprüche, umfassend eine Stromquelle (15), die derart an die Steuerschaltung (12) angeschlossen ist, dass die Abtastimpulse (25) durch Umschalten eines Strompfads von der Stromquelle (15) über den Ausgang (19) zu dem Schalter (14) erzeugt werden.

13. Steuerschaltung nach Anspruch 12, umfassend eine Schalteinrichtung (17) zum Umschalten des Strompfads (15) von der Stromquelle (15) zu dem Schalter (14).

14. Steuerschaltung nach Anspruch 12 oder 13, umfassend eine Einrichtung (17) zum Kurzschließen der Stromquelle (15) für eine vorbestimmte Zeitdauer, um den Reinigungsimpuls (22) zu erzeugen.

## Revendications

1. Circuit de contrôle (12) pour un dispositif de verrouillage mécanique (11) dans un système de retenue de véhicule à moteur, comprenant une sortie électrique (19) permettant une connexion (13) à un commutateur (14) dudit dispositif de verrouillage (11) actionné en fonction d'un état de verrouillage dudit dispositif de verrouillage (11), des moyens (15, 17, 18) adaptés pour générer un signal de détection (25) et pour appliquer ledit signal de détection (25) audit commutateur (14), et un moyen de détection (20) destiné à capter une valeur électrique indicative d'un état de commutation dudit commutateur (14), **caractérisé en ce que** le signal de détection comprend des impulsions de détection présentant une période de répétition Dt1 et une tension de détection et **en ce que** ledit circuit de contrôle (12) comprend des moyens (21 ; 23, 24) destinés à appliquer audit commutateur (14) une impulsion électrique de nettoyage (22) dont la tension est supérieure audit signal de détection (25) périodique.

2. Circuit de contrôle selon la revendication 1, dans lequel ladite impulsion de nettoyage (22) a une tension d'au moins 6 V.

3. Circuit de contrôle selon la revendication 1 ou 2, dans lequel ladite impulsion de nettoyage (22) a une tension correspondant à la tension principale du véhicule Vs fournie par la batterie du véhicule.

4. Circuit de contrôle selon l'une quelconque des revendications précédentes, dans lequel ladite impulsion de nettoyage (22) est appliquée périodiquement audit commutateur (14).

5. Circuit de contrôle selon l'une quelconque des revendications précédentes, dans lequel ladite impulsion de nettoyage (22) est appliquée conjointement à une impulsion de détection (25).

6. Circuit de contrôle selon la revendication 5, dans lequel ladite impulsion de nettoyage (22) est appliquée conjointement à toutes les, ou toutes les n-ièmes, impulsions de détection (25).

7. Circuit de contrôle selon l'une quelconque des revendications précédentes, dans lequel ladite impulsion de nettoyage (22) est appliquée séparément desdites impulsions de détection (25).

8. Circuit de contrôle selon l'une quelconque des revendications précédentes, dans lequel ladite impulsion de nettoyage (22) est appliquée audit commutateur (14) si ledit circuit de détection (20) détermine qu'une condition prédéterminée est remplie.

9. Circuit de contrôle selon la revendication 8, dans lequel ladite impulsion de nettoyage (22) est appliquée audit commutateur (14) si ladite valeur électrique détectée se situe dans une région hors tolérances par rapport à des régions nominales correspondant aux états de commutation dudit commutateur (14).

10. Circuit de contrôle selon l'une quelconque des revendications précédentes, comprenant un condensateur (21) monté dans ledit circuit de contrôle (12) de manière que ladite impulsion de nettoyage (22) soit générée suite à la décharge dudit condensateur (21).

11. Circuit de contrôle selon l'une quelconque des revendications précédentes, comprenant des moyens (23, 24) destinés à générer ladite impulsion de nettoyage (22) en appliquant la tension issue de la batterie du véhicule Vs, via ladite sortie électrique (19), audit dispositif de verrouillage (11) pendant une période de temps prédéterminée.

12. Circuit de contrôle selon l'une quelconque des revendications précédentes, comprenant une source de courant (15) montée dans ledit circuit de contrôle (12) de manière que lesdites impulsions de détection (25) soient générées en commutant une trajectoire de courant allant de ladite source de courant (15) audit commutateur (14) en passant par ladite sortie (19).

13. Circuit de contrôle selon la revendication 12, comprenant un dispositif de commutation (17) destiné à commuter ladite trajectoire de courant entre ladite source de courant (15) et ledit commutateur (14).

14. Circuit de contrôle selon la revendication 12 ou 13, comprenant un dispositif (17) destiné à court-circuiter ladite source de courant (15) pendant une période de temps prédéterminée afin de générer ladite impulsion de nettoyage (22).
